# EUROPÄISCHE PATENTSCHRIFT

(11) **EP 2 719 603 B1**
(45) Veröffentlichungstag und Bekanntmachung des Hinweises auf die Patenterteilung: **06.07.2016**
(21) Anmeldenummer: 13187296.2
(22) Anmeldetag: 04.10.2013
(51) Int. Cl.: B62B 3/06

(54) **Flurförderzeug mit in schwenkbaren Lastrollenträgern angeordneten Lastrollen**
Industrial truck with load rollers arranged in load roller mounts on a wheel arm
Chariot de manutention doté de galets de charge agencés dans des supports de galets de charge pivotants

(30) Priorität: 15.10.2012 DE 102012109790; 17.01.2013 DE 102013100469
(43) Veröffentlichungstag der Anmeldung: 16.04.2014
(73) Patentinhaber: OM Carrelli Elevatori S.p.A., 20020 Lainate (MI) (IT)
(72) Erfinder: Mariotti, Fabio, 42016 Guastalla (IT)
(74) Vertreter: Geirhos, Johann

(56) Entgegenhaltungen:
- DE-A1-102006 035 822
- SE-B- 352 868
- US-A- 5 354 080

## Beschreibung

Die Erfindung betrifft ein Flurförderzeug, insbesondere Hubwagen, mit einem Antriebsteil und einem relativ zum Antriebsteil anhebbaren Lastteil, wobei der Lastteil zumindest einen Radarm aufweist, der mit mindestens einer Lastrolle versehen ist, wobei die Lastrolle in einem Lastrollenträger drehbar gelagert ist und der Lastrollenträger mittels einer Schwenklagerung an dem Radarm schwenkbar gelagert ist, wobei zur Schwenklagerung des Lastrollenträgers ein im Radarm gelagerter Lagerbolzen vorgesehen ist und zur Betätigung des Lastrollenträgers ein mit dem Lastrollenträger in Wirkverbindung stehendes Gestänge vorgesehen ist, das mittels eines Koppelbolzens mit dem Lastrollenträger gelenkig verbunden ist.

Bekannte Flurförderzeuge mit Radarmen dienen dazu, mit den Radarmen unter eine Palette zu fahren und die Palette anzuheben. Zum Anheben der Palette werden die Radarme angehoben. Hierzu wird der Lastteil relativ zu dem Antriebsteil angehoben bzw. abgesenkt, wobei schwenkbar an den Radarmen angeordneten Lastrollenträger, in denen die Lastrollen gelagert sind, über eine Hebelanordnung und ein Gestänge betätigt und somit nach unten ausgeschwenkt bzw. nach oben eingeschwenkt werden, um die Radarme anzuheben bzw. abzusenken. Eine derartige Hubbewegung wird bei Niederhubwagen bzw. Kommissionieren als Niederhub bezeichnet bzw. bei Hochhubwagen mit einem zusätzlichen Hubgerüst als Initialhub.

Gattungsgemäße Hubwagen mit in schwenkbar an den Radarmen angeordneten und mit drehbaren Lastrollen versehenen Lastrollenträgern, die mittels eines Gestänges und einer Hebelanordnung betätigt werden, sind beispielsweise aus der EP 1 690 823 B1 oder der DE 10 2009 033 709 A1 bekannt.

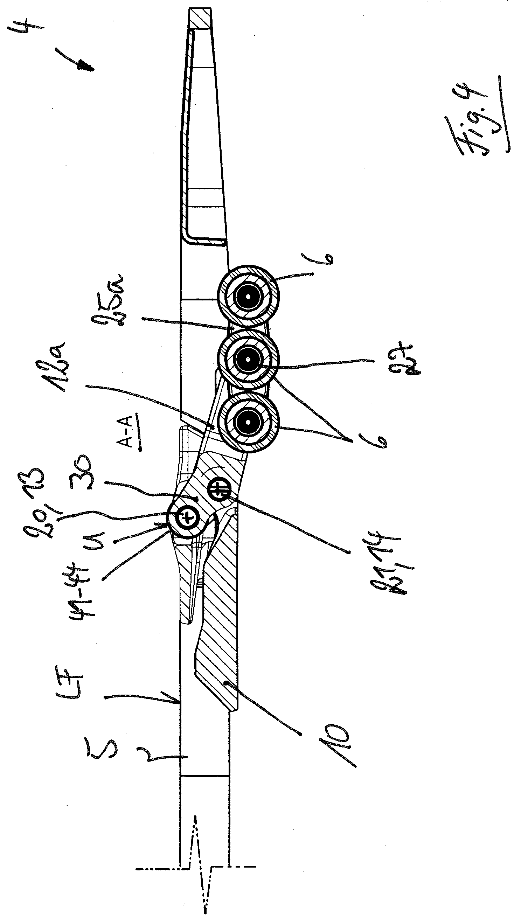

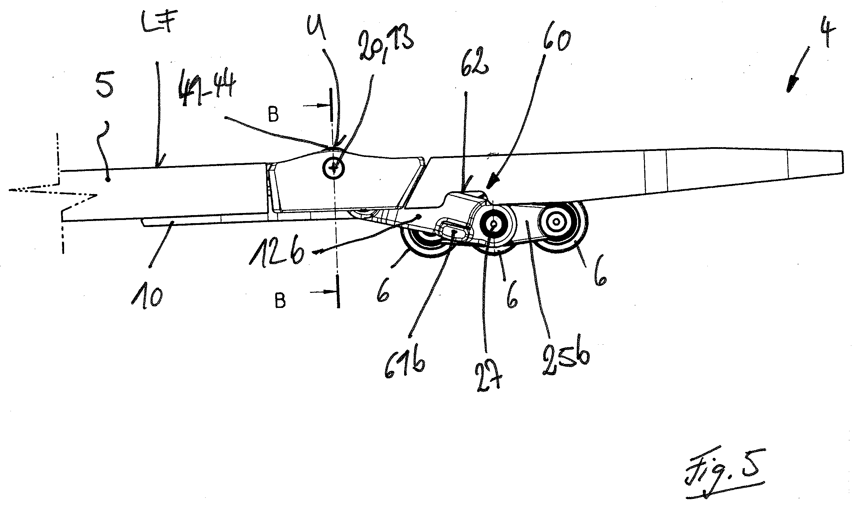

Aus der SE 352 868 B ist ein gattungsgemäßer Hubwagen bekannt. In dem Ausführungsbeispiel der Figuren 4 bis 6 ist der Lastrollenträger mit zwei äußeren Lagerflanschen und zwei inneren Lagerflanschen versehen, in denen ein Lagerbolzen gelagert ist, mit dem der Lastrollenträger am Radarm schwenkbar gelagert ist. Ein Koppelbolzen, mit dem der Lastrollenträger mit einem Gestänge gelenkig gekoppelt ist, ist in den inneren Lagerflanschen gelagert.

Die Radarmhöhe der Radarme in der abgesenkten Stellung wird im wesentlichen durch die Ausführung der Schwenklagerung des Lastrollenträgers am Radarm und die Ausführung der gelenkigen Koppelung des Gestänges mit dem Lastrollenträger bestimmt, wobei unter anderem die Durchmesser des Lagerbolzens und des Koppelbolzens die Radarmhöhe der Radarme in der abgesenkten Stellung bestimmen. Bekannte Hubwagen weisen Lagerbolzen und Koppelbolzen mit relativ großen Durchmessern auf und sind für die

Handhabung von standardisierten Europlatten ausgeführt, die eine Einfahrhöhe für die Radarme von 100mm aufweisen und hierzu in der vollständig abgesenkten Stellung eine Radarmhöhe der Radarme im Bereich von ca. 85mm aufweisen.

Aufgrund der Ausführung der Schwenklagerung des Lastrollenträgers am Radarm und die Ausführung der gelenkigen Koppelung des Gestänges mit dem Lastrollenträger mit im Durchmesser großen Lagerbolzen und Koppelbolzen ist eine Verringerung der Radarmhöhe, um Sonderpaletten mit einer gegenüber Europalatten verringerten Einfahrhöhe handhaben zu können, bei bekannten Flurförderzeugen nicht möglich.

Der vorliegenden Erfindung liegt die Aufgabe zugrunde, ein Flurförderzeug der eingangs genannten Gattung zur Verfügung zu stellen, das eine bauraumsparende Ausführung der Radarme mit einer geringen Radarmhöhe in der abgesenkten Stellung des Lastteils zur Handhabung von Sonderpaletten mit einer geringen Einfahrhöhe ermöglicht.

Diese Aufgabe wird erfindungsgemäß dadurch gelöst, dass der Lastroilenträger aus zwei äußeren Lagerhebeln, in denen Lagerflansche zur Lagerung des Lagerbolzens und Lagerflansche zur Lagerung des Koppelbolzens ausgebildet sind, und zumindest einem weiteren zwischen den äußeren Lagerhebeln angeordneten Steg besteht, wobei in dem Steg ein Lagerflansch zur Lagerung des Lagerbolzens und ein Lagerflansch zur Lagerung des Koppelbolzens ausgebildet ist. Bei dem erfindungsgemäßen Flurförderzeug ist an dem Lastrollenträger zusätzlich zu den äußeren Lagerhebeln, in denen jeweils Lagerflansche zur Lagerung des Lagerbolzens und Lagerflansche zur Lagerung des Koppelbolzens ausgebildet sind, mindestens ein weiterer mittlerer Lagerflansch für den Lagerbolzen und den Koppelbolzen vorgesehen, der an einem mittleren Steg des Lastrollenträgers ausgebildet ist. Hierdurch wird mindestens ein weiterer Lagerflansch gebildet, so dass der Lagerbolzens an mehr als zwei Lagerflanschen an dem Radarm gelagert und abgestützt werden kann und der Koppelbolzen an mehr als zwei Lagerflanschen an dem Lastrallenträger gelagert und abgestützt werden kann, in denen die auftretenden Kräfte übertragen und abgestützt werden. Es wird somit ermöglicht, den Durchmesser des Lagerbolzens und des Koppelbolzens bei geringen auftretenden Belastungen und ohne Gefahr der Durchbiegung des Lagerbolzens bzw. des Koppelbolzens zu verringern, wodurch eine geringe Bauhöhe der Radarme in der abgesenkten Stellung ermöglicht wird.

Gemäß einer vorteilhaften Weiterbildung der Erfindung weist der Radarm äußere Lagerflansche zur Lagerung des Lagerbolzens und innere Lagerflansche zur Lagerung des Lagerbolzens auf, wobei die äußeren Lagerhebel des Lastrollenträgers jeweils zwischen dem äußeren Lagerflansch und dem inneren Lagerflansch des Radarms angeordnet sind. Für die Abstützung und Lagerung des Lagerbolzens im Radarm sind somit zumindest vier Lagerflansche am Radarm vorgesehen, so dass die auftretenden Kräfte bei geringen Belastungen und geringer Durchbiegung des Lagerbolzens in den Radarm eingeleitet werden können und der Lagerbolzen im Durchmesser verringert werden kann.

Mit besonderem Vorteil ist gemäß einer Ausführungsform der Erfindung der Steg des Lastrollenträgers zwischen den beiden inneren Lagerflanschen des Radarms angeordnet. Hierdurch ergibt sich eine Lagerung des Lagerbolzens abwechselnd in einem Lagerflansch des Radarms und einem Lagerflansch des Lastrollenträgers. Hierdurch ist eine Lagerung des Lagerbolzens erzielbar, die eine besonders effektive Verringerung des Durchmessers des Lagerbolzens ermöglicht, um eine geringe Bauhöhe der Radarme in der abgesenkten Stellung zu erzielen.

Besondere Vorteile ergeben sich, wenn gemäß einer Ausführungsform der Erfindung das Gestänge mit einer aus zwei Lagerabschnitten bestehenden Lagergabel zur Lagerung des Koppelbolzens versehen ist, die zwischen den äußeren Lagerhebeln des Lastrollenträgers angeordnet ist, wobei der Steg des Lastrollenträgers zwischen den beiden Lagerabschnitten des Gestänges angeordnet ist. Hierdurch wird es auf einfache Weise erzielt, den Koppelbolzen, mittels dem das Gestänge gelenkig an dem Lastrollenträger angelenkt ist, an den beiden Lagerflanschen an den äußeren Lagerhebeln und dem mittleren Lagerflansch an dem zusätzlichen Steg des Lastrollenträgers zu lagern und abzustützen. Hierdurch wird ebenfalls ermöglicht, an dem Koppelbolzen die auftretenden Kräfte bei geringen Belastungen und geringer Durchbiegung des Koppelbolzens zu übertragen und den Koppelbolzen im Durchmesser zu verringern.

Gemäß einer bevorzugten Weiterbildung der Erfindung ist zwischen dem Lastrollenträger und dem Radarm ein Anschlagmittel für die abgesenkte Stellung des Radarms ausgebildet. Mit einem derartigen Anschlagmittel zwischen dem Lastrollenträger und dem Radarm können bei abgesenkten Radarmen auftretende Kräfte direkt von dem Lastrollenträger in den Radarm eingeleitet werden und somit die auf den Lagerbolzen und den Koppelbolzen in der abgesenkten Stellung der Radarme einwirkenden Kräfte verringert werden, so dass auftretende stoßartige Belastungen, beispielsweise beim Fahrbetrieb des Flurförderzeugs mit vollständig abgesenkten Radarmen direkt in den Radarm eingeleitet werden können. Hierdurch ist eine weitere Verringerung der Durchmesser des Lagerbolzens und des Koppelbolzens erzielbar.

Bei dem erfindungsgemäßen Flurförderzeug weist gemäß einer bevorzugten Ausführungsform der Radarm in der vollständig abgesenkten Stellung des Lastteils eine Radarmhöhe von unterhalb 50mm auf. Die erfindungsgemäße Lagerung des Lagerbolzens und des Koppelbolzens ermöglicht durch die erzielbare Durchmesserverringerung dieser Bolzens gegenüber bekannten Flurförderzeugen eine deutliche Verringerung der Radarmhöhe der abgesenkten Radarme, so dass mit dem erfindungsgemäßen Flurförderzeug Sonderpaletten, beispielsweise aus Papier oder Pappe bestehende Paletten, mit einer gegenüber Europaletten verringerten Einfahrhöhe mit den Radarmen unterfahren und angehoben werden können.

Die Erfindung betrifft weiterhin ein System bestehend aus einem Flurförderzeug mit einer Radarmhöhe des Radarms in der vollständig abgesenkten Stellung des Lastteils von höchstens 50mm und einer Sonderpalette, die eine Einfahrhöhe von Aufnahmeöffnungen für die Radarme des Flurförderzeugs von 50mm zwischen einer Fahrbahnoberfläche und einer Unterseite einer Lasttragfläche der Sonderpalette aufweist. Mit dem erfindungsgemäßen Flurförderzeug, das aufgrund der erfindungsgemäßen Lagerung des Lagerbolzens und des Koppelbolzens mit einer geringen Radarmhöhe der Radarme in der abgesenkten Stellung versehen ist, können Sonderpaletten mit einer geringen Einfahrhöhe sicher und auf einfache Weise gehandhabt werden.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer schematischen Darstellung in der abgesenkten Stellung des Lastteils,
- Figur 2: das Flurförderzeug der Figur 1 bei vollständig angehobenem Lastteil,
- Figur 3: eine Ansicht der Spitze eines Radarms des erfindungsgemäßen Flurförderzeugs der Figuren 1 und 2 von oben,
- Figur 4: einen Schnitt entlang der Linie A-A der Figur 3,
- Figur 5: eine Seitenansicht der Spitzes des Radarms,
- Figur 6: einen Schnitt entlang der Linie B-B der Figur 5,
- Figur 7: ein Gestänge des erfindungsgemäßen Flurförderzeugs in einer perspektivischen Darstellung,
- Figur 8: einen Lastrollenträger des erfindungsgemäßen Flurförderzeugs in einer perspektivischen Darstellung und
- Figur 9: einen Schnitt des Lastrollenträgers gemäß Linie C-C der Figur 8.

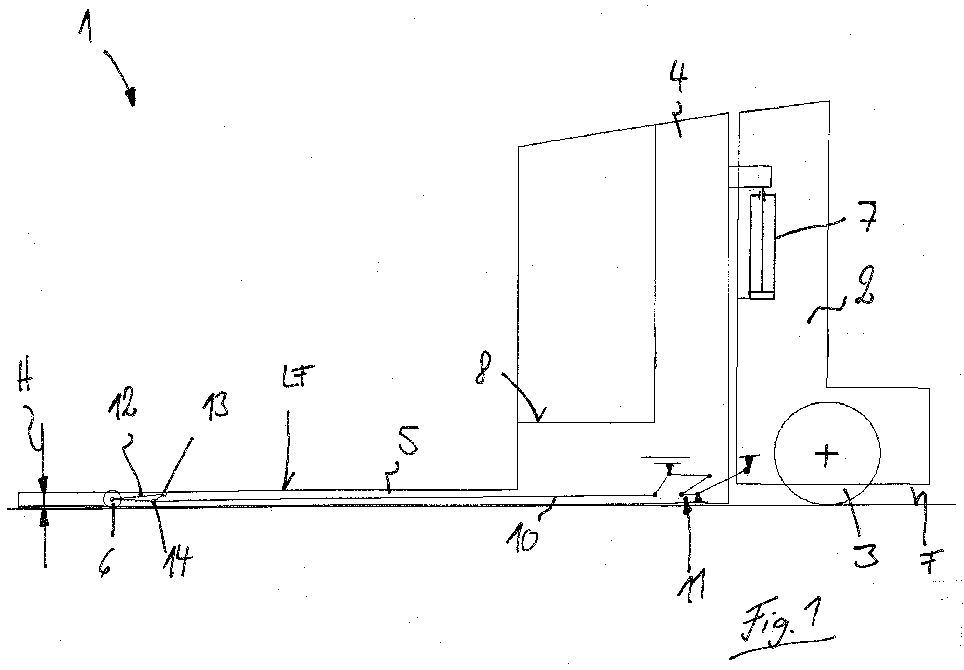

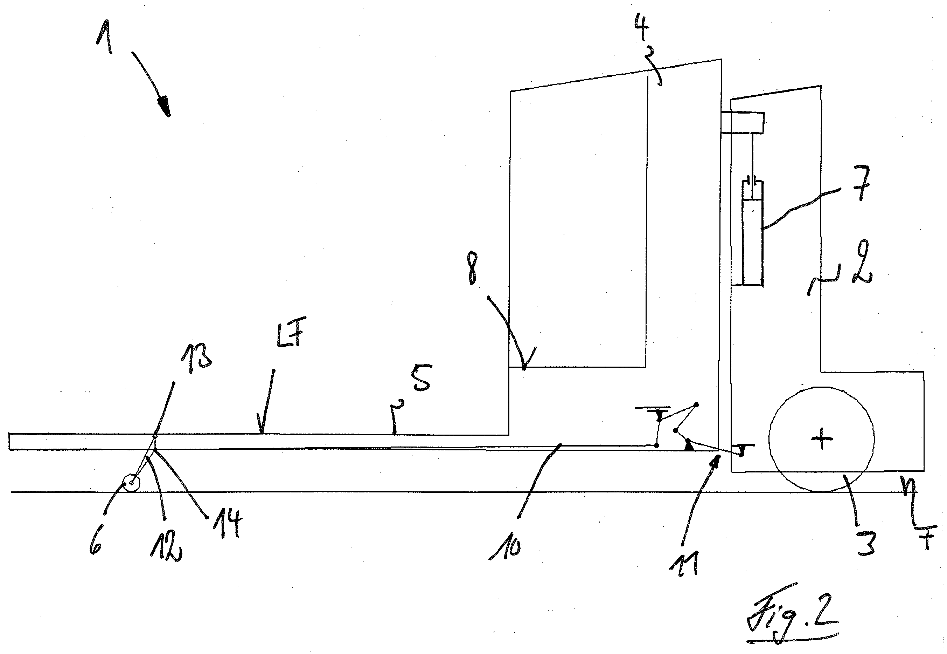

Das in den Figuren 1 und 2 in einer Seitenansicht dargestellte Flurförderzeug 1, beispielsweise ein als Niederhubwagen oder Hochhubwagen ausgebildeter Hubwagen, weist einen Antriebsteil 2, der mit einem lenkbaren Antriebsrad 3 versehen ist, und einen relativ zum Antriebsteil 2 anhebbaren Lastteil 4 auf. Der Lastteil 4 umfasst bevorzugt zwei seitlich beabstandete Radarme 5, die sich mittels an der Spitze des jeweiligen Radarms 5 angeordneten Lastrollen 6 auf einer Fahrbahn F abstützen. Der Antriebteil 2 ist mittels des Antriebrades 3 auf der Fahrbahn F abgestützt. Zur Erhöhung der Stabilität kann das Antriebsteil 2 mit nicht näher dargestellten Stützrollen auf der Fahrbahn F abgestützt sein. Die Oberseite der Radarme 5 bilden eine Lasttragfläche LF, mit der eine nicht näher dargestellte Palette unterfahren angehoben werden kann.

Zum Anheben des Lastteils 4 ist eine Hubeinrichtung 7, beispielsweise ein oder mehrere Hydraulikzylinder, vorgesehen, die zwischen dem Antriebsteil 2 und dem Lastteil 4 angeordnet ist. Um die Hubbewegung des Lastteils 4 auf die Lastrollen 6 an den Enden der Radarme 5 zu übertragen, ist für jeden Radarm 5 ein mit den Lastrollen 6 in Wirkverbindung stehendes Gestänge 10 und eine das Gestänge 10 betätigende Hebelanordnung 11 vorgesehen. Die Hebelanordnung 11 kann weiterhin als Führung zur Führung des Lastteils 4 bei der Hub- und Senkbewegung dienen.

Das Lastteil 4 kann weiterhin bei einem batterie-elektrisch betriebenen Flurförderzeug 1 ein Batteriefach 8 für eine Traktionsbatterie umfassen, die einen elektrischen Fahrantrieb des Antriebsrades 3 und einen elektrischen Antrieb der Hubeinrichtung 7 mit elektrischer Energie versorgt.

Die Lastrollen 6 sind in Lastrollenträgern 12 drehbar angeordnet, die an dem entsprechenden Radarm 5 schwenkbar angeordnet sind. Zur schwenkbaren Lagerung der Lastrollenträger 12 an dem jeweiligen Radarm 5 ist jeweils eine Schwenklagerung 13 vorgesehen. Im dargestellten Ausführungsbeispiel sind die Gestänge 10 als Zugstangen ausgebildet, wobei die Schwenklagerung 13 im vertikal oberen Bereich der Radarme 5 angeordnet ist und die als Zugstangen ausgebildeten Gestänge 10 in vertikaler Richtung unterhalb der Schwenklagerung 13 mittels eines Koppelpunktes 14 gelenkig mit dem Lastrollenträger 12 verbunden sind.

Beim Anheben des Lastteils 4 mittels der Hubeinrichtung 7 werden die mittels der Hebelanordnung 11 und des Gestänges 10 betätigten Lastrollenträger 12, die mit den Lastrollen 6 versehen sind, - wie in der Figur 2 verdeutlicht ist, die den Lastteil 4 in der vollständig angehobenen Stellung zeigt - im Gegenuhrzeigersinn nach unten um die Schwenklagerung 13 ausgeschwenkt, so dass die Radarme 5 nach oben angehoben werden. Entsprechend werden beim Absenken des Lastteils die Lastrollenträger 12 im Uhrzeigersinn um die Schwenklagerung 13 eingeschwenkt, so dass sich die Radarme 5 absenken.

Die Radarme 5 des erfindungsgemäßen Flurförderzeugs 1 weisen in der vollständig abgesenkten Stellung des Lastteils 4 eine Radarmhöhe H von weniger als 50mm auf, so dass mit dem erfindungsgemäßen Flurförderzeug 1 Sonderpaletten gehandhabt werden können, die eine Einfahrhöhe für die Radarme 5 von 50mm aufweisen.

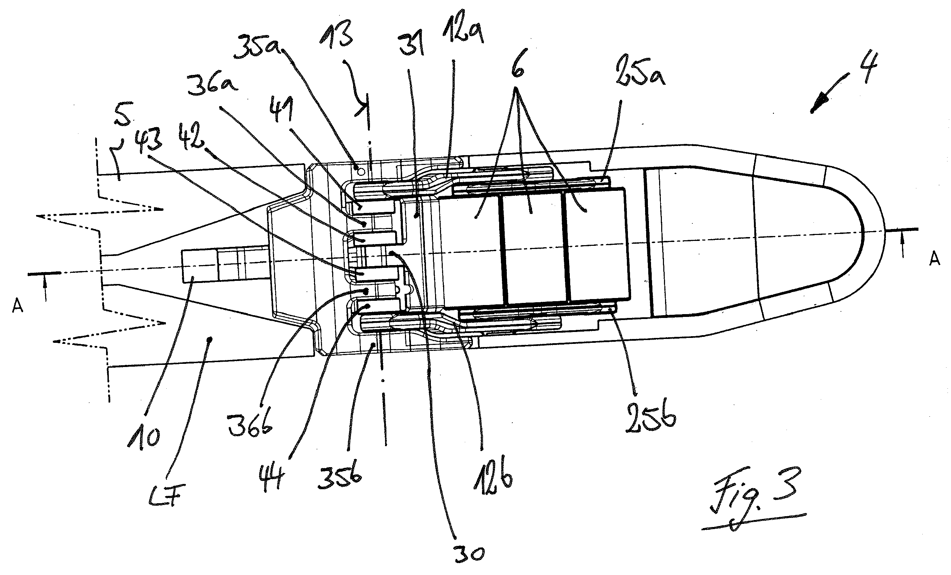

In den Figuren 3 bis 9 ist eine konstruktive Ausführung der Radarme 5 des Flurförderzeugs 1 der Figuren 1 und 2 dargestellt.

Im dargestellten Ausführungsbeispiel umfasst die Schwenklagerung 13 des Lastrollenträgers 12 an dem Radarm 5 einen Lagerbolzen 20. Zur gelenkigen Anlenkung des Gestänges 10 an dem Lastrollenträger 12 ist ein Koppelbolzen 21 vorgesehen, der den Koppelpunkt 14 bildet.

Um die geringe Radarmhöhe H von weniger als 50mm in der abgesenkten Stellung der Radarme 5 zu erzielen, ist der Lagerbolzen 20 in mehreren Lagerpunkten, im dargestellten Ausführungsbeispiel in vier Lagerpunkten, an dem Radarm 5 abgestützt und in mehreren Lagerpunkten, im dargestellten Ausführungsbeispiel in drei Lagerpunkten, an dem Lastrollenträger 12 abgestützt, so dass der Lagerbolzen 20 mit einem geringen Durchmesser ausgeführt werden kann. Weiterhin ist der Koppelbolzen 21 in mehreren Lagerpunkten, im dargestellten Ausführungsbeispiel in drei Lagerpunkten mit dem Lastrollenträger 12 verbunden, so dass ebenfalls der Koppelbolzen 21 mit einem geringen Durchmesser ausgeführt werden kann.

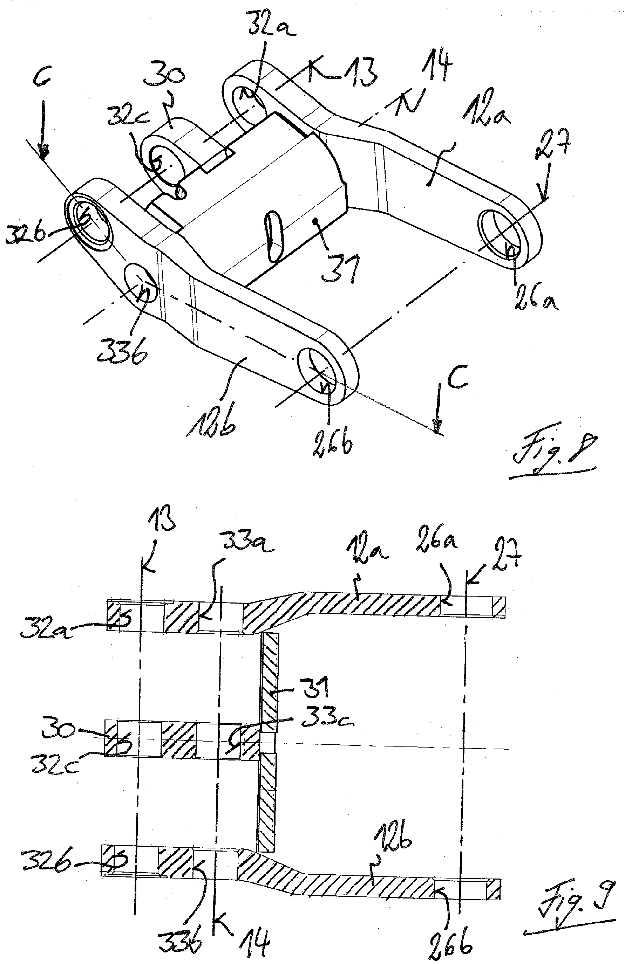

Hierzu besteht der gabelförmige Lastrollenträger 12 - wie in Verbindung mit den Figuren 8 und 9 verdeutlicht ist - aus zwei seitlichen, äußere Lagerhebel 12a, 12b, zwischen denen Wippen 25a, 25b schwenkbar gelagert sind, in denen die Lastrollen 6, im vorliegenden Ausführungsbeispiel drei Lastrollen 6, drehbar gelagert sind. In den äußere Lagerhebel 12a, 12b ist zur schwenkbaren Lagerung der Wippen 25a, 25b jeweils ein Lagerflansch 26a, 26b für eine Lagerung 27 ausgebildet, mittels der die Wippen 25a, 25b an den Lagerhebeln 12a, 12b schwenkbar gelagert sind. Die Lagerflansche 26a, 26b für die Wippen 25a, 25b sind von einer Durchgangsbohrung in den Lagerhebeln 12a, 12b gebildet.

Zusätzlich ist der Lastrollenträger 12 im Bereich der Schwenklagerung 13 und des Koppelpunktes 14 mit mindestens einem mittigen zusätzlichen Steg 30 versehen, der zwischen den äußere Lagerhebeln 12a, 12b und parallel zu diesen angeordnet ist. Der Steg 30 ist hierbei mittels einer Verbindungsplatte 31 zwischen den äußere Lagerhebel 12a, 12b angeordnet und befestigt.

In den äußeren Lagerhebel 12a, 12b sind Lagerflansche 32a, 32b zur Lagerung des Lagerbolzens 20 und Lagerflanschen 33a, 33b zur Lagerung des Koppelbolzens 21 ausgebildet. In dem zwischen den äußeren Lagerhebeln 12a, 12b angeordneten Steg 30 des Lastrollenträgers 12 ist ein zusätzlicher Lagerflansch 32c zur Lagerung des Lagerbolzens 20 und ein zusätzlicher Lagerflansch 33c zur Lagerung des Koppelbolzens 21 ausgebildet. Die Lagerflansch 32a, 32b, 32c für den Lagerbolzen 20 und die Lagerflansche 33a, 33b, 33c für den Koppelbolzen 21 sind jeweils von einer Durchgangsbohrung in den Lagerhebeln 12a, 12b und dem Steg 30 des Lastrollenträgers 12 gebildet. Die Durchgangsbohrungen in dem Lastroilenträger 12, die die Lagerflansche 32a, 32b, 32c für den Lagerbolzen 20, die Lagerflansche 33a, 33b, 33c für den Koppelbolzen 21 und die Lagerflansche 26a, 26b für die Wippen 25a, 25b bilden, sind parallel zueinander angeordnet.

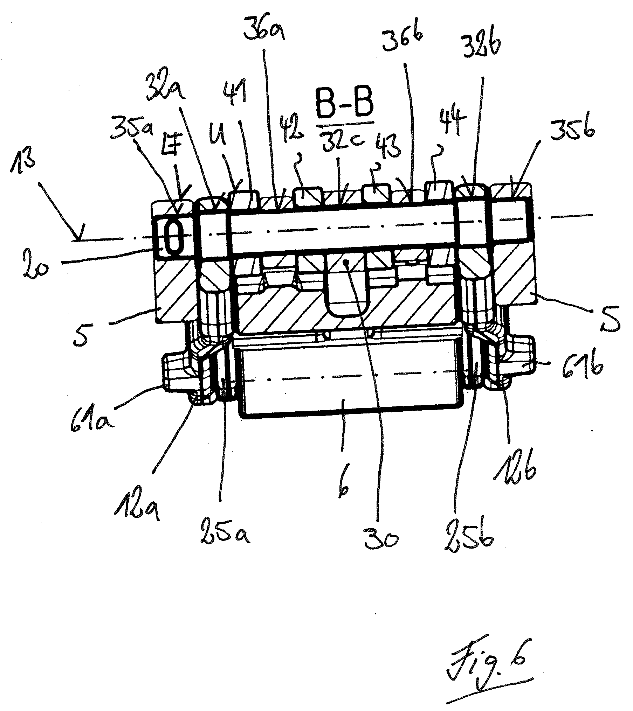

Der Radarm 5 weist zur Lagerung des Lagerbolzens 20 - wie in den Figuren 3 und 6 verdeutlicht ist-an den Außenseiten jeweils eine Lagergabel auf, die jeweils einen äußeren Lagerflansch 35a, 35b und einen inneren Lagerflansch 36a, 36b für den Lagerbolzen 20 bilden. Die äußeren Lagerhebel 12a bzw. 12b des Lastrollenträgers 12 sind jeweils zwischen dem äußeren Lagerflansch 35a bzw. 35b und dem inneren Lagerflansch 36a bzw. 36b einer Lagergabel des Radarms 5 angeordnet. Die Lagerflansche 35a, 35b, 36a, 36b sind zur Lagerung des Lagerbolzens 20 von einer Durchgangsbohrung gebildet, die in den entsprechenden Lagergabeln des Radarms 5 angeordnet ist.

Der zusätzliche mittige Steg 30 des Lastrollenträgers 12 ist hierbei zwischen den beiden inneren Lagerflanschen 36a, 36b des Radarms 5 angeordnet.

Der Lagerbolzen 20 ist somit abwechselnd in einem Lagerflansch 35a, 36a, 36b, 35b des Radarms 5 und einem Lagerflansch 32a, 32c, 32b des Lastrollenträgers 12 gelagert und abgestützt.

Das erfindungsgemäße Flurförderzeug 1 ist im Bereich der Schwenklagerung 13 des Lastrollenträgers 12 an der Oberseite des jeweiligen Radarms 5 weiterhin mit einer

Einfahrhilfe zur Erleichterung des Unterfahrens der Palette versehen, die von mindestens einer drehbar auf dem Lagerbolzen 20 gelagerten Rolle 41, 42, 43, 44 gebildet ist. Die Rollen 41, 42, 43, 44 weisen einen derartigen Durchmesser auf, dass die Umfangsfläche U der Rollen 41, 42, 43, 44 die Lasttragfläche LF an der Oberseite des entsprechenden Radarms 5 geringfügig überragt.

Im dargestellten Ausführungsbeispiel ist jeweils eine Rolle zwischen dem inneren Lagerflansch 36a, 36b des Radarms 5 und dem mit dem mittleren Lagerflansch 32c versehenen mittigen Steg 30 des Lastrollenträgers 12 sowie zwischen dem inneren Lagerflansch 36a, 36b des Radarms 5 und dem mit dem äußeren Lagerflansch 32a, 32b versehenen äußeren Lagerhebel 12a, 12b des Lastrollenträgers 12 angeordnet, so dass jeweils zwei Rollen paarweise an beiden Seiten des inneren Lagerflansches 36a, 36b des Radarms 5 angeordnet sind. Die Rolle 41 ist somit zwischen dem äußeren Lagerhebel 12a des Lastrollenträgers 12 und dem inneren Lagerflansch 36a des Radarms 5, die Rolle 42 zwischen dem inneren Lagerflansch 36a des Radarms 5 und dem mittigen Steg 30 des Lastrollenträgers 12, die Rolle 43 zwischen dem mittigen Steg 30 des Lastrollenträgers 12 und dem inneren Lagerflansch 36b des Radarms 5 und die Rolle 44 zwischen dem inneren Lagerflansch 32b des Radarms 5 und dem äußeren Lagerhebel 12b des Lastrollenträgers 12 angeordnet.

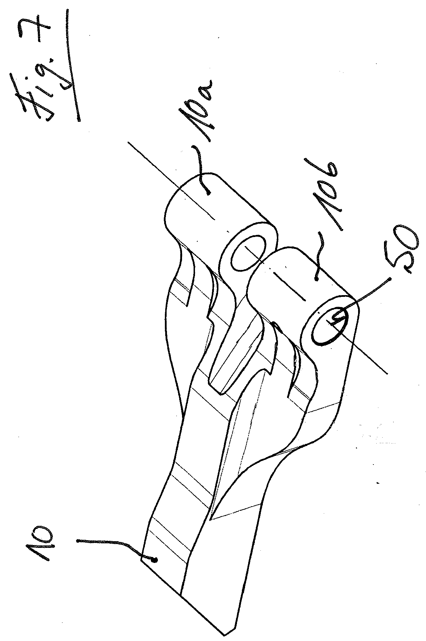

Das Gestänge 10 ist zur gelenkigen Kopplung mit dem Lastrollenträger 12 - wie in der Figur 7 verdeutlicht ist - mit einer aus zwei Lagerabschnitten 10a, 10b bestehenden Lagergabel versehen, in denen eine Durchgangsbohrung 50 zur Lagerung des Koppelbolzens 21 ausgebildet ist. Der Lagerabschnitt 10a befindet sich hierbei zwischen dem äußeren Lagerhebel 12a und dem mittigen Steg 30 des Lastrollenträgers 12 und der Lagerabschnitt 10b zwischen dem äußeren Lagerhebel 12b und dem mittigen Steg 30 des Lastrollenträgers 12, so dass der Steg 30 des Lastrollenträgers 12 zwischen den beiden Lagerabschnitten 10a, 10b des Gestänges 10 angeordnet ist.

Zwischen dem Lastrollenträger 12 und dem Radarm 5 ist weiterhin ein Anschlagmittel 60 für die abgesenkte Stellung des Radarms 5 ausgebildet. Das Anschlagmittel 60 ist von flügelartigen Erweiterungen 61 a, 61 b an den Außenseiten der Lagerhebel 12a, 12b des Lastrollenträgers 12 gebildet, die mit Anschlagflächen 62 an Seitenwangen des Radarms 5 zusammenwirken. Die Anschlagmittel 60 begrenzen die Schwenkbewegung der Lastrollenträger 12 nach oben in der vollständig abgesenkten Stellung der Radarme 5 und ermöglichen in Verbindung mit einer entsprechenden Gestaltung des den entsprechenden Lastrollenträger 12 betätigenden Gestänges 10, dass in der vollständig abgesenkten Stellung ein Freiraum zwischen den Rollen 41, 42, 43, 44 und dem Gestänge 10 verbleibt, der eine Drehen der Rollen 41, 42, 43, 44 auf dem Lagerbolzen 20 ermöglicht. Zudem können bei abgesenkten Radarmen 5, wobei sich die flügelartigen Erweiterungen 61 a, 61 b des Lastrollenträgers 12 über die Anschlagflächen 62 direkt an den Radarmen 5 abstützen, die auf den Lagerbolzen 20 und den Koppelbolzen 21 einwirkenden Kräfte verringert werden.

Die erfindungsgemäße Lagerung des Lagerbolzens 20 und des Koppelbolzens 21 und die erfindungsgemäße Ausführung des Lastrollenträgers 12 mit dem zusätzlichen mittigen Steg 30, an dem zusätzliche Lageflansche 32c, 33c für den Lagerbolzen 20 und den Koppelbolzen 21 angeordnet sind, ermöglicht es, den Lagerbolzen 20 und den Koppelbolzen 21 im Durchmesser zu verringern, so dass die Radarmhöhe H der Radarme 5 verringert werden kann, um Sonderpaletten mit einer geringen Einfahrhöhe handhaben zu können.

## Patentansprüche

1. Flurförderzeug (1), insbesondere Hubwagen, mit einem Antriebsteil (2) und einem relativ zum Antriebsteil (2) anhebbaren Lastteil (4), wobei der Lastteil (4) zumindest einen Radarm (5) aufweist, der mit mindestens einer Lastrolle (6) versehen ist, wobei die Lastrolle (6) in einem Lastrollenträger (12) drehbar gelagert ist und der Lastrollenträger (12) mittels einer Schwenklagerung (13) an dem Radarm (5) schwenkbar gelagert ist, wobei zur Schwenklagerung (13) des Lastrollenträgers (12) ein im Radarm (5) gelagerter Lagerbolzen (20) vorgesehen ist und zur Betätigung des Lastrollenträgers (12) ein mit dem Lastrollenträger (12) in Wirkverbindung stehendes Gestänge (10) vorgesehen ist, das mittels eines Koppelbolzens (21) mit dem Lastrollenträger (12) gelenkig verbunden ist, **dadurch gekennzeichnet, dass** der Lastrollenträger (12) aus zwei äußeren Lagerhebeln (12a, 12b), in denen Lagerflansch (32a, 32b) zur Lagerung des Lagerbolzens (20) und Lagerflansch (33a, 33b) zur Lagerung des Koppelbolzens (21) ausgebildet sind, und zumindest einem weiteren zwischen den äußeren Lagerhebeln (12a, 12b) angeordneten Steg (30) besteht, wobei in dem Steg (30) ein Lagerflansch (32c) zur Lagerung des Lagerbolzens (20) und ein Lagerflansch (33c) zur Lagerung des Koppelbolzens (21) ausgebildet ist.

2. Flurförderzeug nach Anspruch 1, **dadurch gekennzeichnet, dass** der Radarm (5) äußere Lagerflansch (35a, 35b) zur Lagerung des Lagerbolzens (20) und innere Lagerflansche (36a, 36b) zur Lagerung des Lagerbolzens (20) aufweist, wobei die äußeren Lagerhebel (12a, 12b) des Lastrollenträgers (12) jeweils zwischen dem äußeren Lagerflansch (35a; 35b) und dem inneren Lagerflansch (36a; 36b) des Radarms (5) angeordnet sind.

3. Flurförderzeug nach Anspruch 1 oder 2, **dadurch gekennzeichnet, dass** der Steg (30) des Lastrollenträgers (12) zwischen den beiden inneren Lagerflanschen (36a, 36b) des Radarms (5) angeordnet ist.

4. Flurförderzeug nach einem der Ansprüche 1 bis 3, **dadurch gekennzeichnet, dass** das Gestänge (10) mit einer aus zwei Lagerabschnitten (10a, 10b) bestehenden Lagergabel zur Lagerung des Koppelbolzens (21) versehen ist, die zwischen den äußeren Lagerhebelen (12a, 12b) des Lastrollenträgers (12) angeordnet ist, wobei der Steg (30) des Lastrollenträgers (12) zwischen den beiden Lagerabschnitten (10a, 10b) des Gestänges (10) angeordnet ist.

5. Flurförderzeug nach einem der Ansprüche 1 bis 4, **dadurch gekennzeichnet, dass** zwischen dem Lastroilenträger (12) und dem Radarm (5) ein Anschlagmittel (60) für die abgesenkte Stellung des Radarms (5) ausgebildet ist.

6. Flurförderzeug nach einem der Ansprüche 1 bis 5, **dadurch gekennzeichnet, dass** der Radarm (5) in der vollständig abgesenkten Stellung des Lastteils (4) eine Radarmhöhe (H) von unterhalb 50mm aufweist.

7. System bestehend aus einem Flurförderzeug nach einem der vorangegangenen Ansprüche mit einer Radarmhöhe (H) des Radarms (5) in der vollständig abgesenkten Stellung des Lastteils (4) von höchstens 50mm und einer Sonderpalette, die eine Einfahrhöhe einer Aufnahmeöffnung für die Radarme (5) des Flurförderzeugs (1) von 50mm zwischen einer Fahrbahnoberfläche und einer Unterseite einer Lasttragfläche der Sonderpalette aufweist.

## Claims

1. Industrial truck (1), in particular pallet truck, with a drive part (2) and a load part (4) that can be raised relative to the drive part (2), wherein the load part (4) has at least one wheel arm (5), which is provided with at least one load roller (6), wherein the load roller (6) is borne rotatably in a load roller mount (12), and the load roller mount (12) is borne pivotably by means of a pivot bearing arrangement (13) on the wheel arm (5), wherein, for the pivot bearing arrangement (13) of the load roller mount (12), a bearing bolt (20) borne in the wheel arm (5) is provided and, for actuating the load roller mount (12), a linkage (10) which is operatively connected to the load roller mount (12) and is connected in articulated fashion by means of a coupling bolt (21) to the load roller mount (12), **characterized in that** the load roller mount (12) comprises two outer bearing levers (12a, 12b), in which bearing flanges (32a, 32b) for the bearing arrangement of the bearing bolt (20) and bearing flanges (33a, 33b) for the bearing arrangement of the coupling bolt (21) are formed, and at least one further web (30), which is arranged between the outer bearing levers (12a, 12b), wherein a bearing flange (32c) for the bearing arrangement of the bearing bolt (20) and a bearing flange (33c) for the bearing arrangement of the coupling bolt (21) are formed in the web (30).

2. Industrial truck according to Claim 1, **characterized in that** the wheel arm (5) has outer bearing flanges (35a, 35b) for the bearing arrangement of the bearing bolt (20) and inner bearing flanges (36a, 36b) for the bearing arrangement of the bearing bolt (20), wherein the outer bearing levers (12a, 12b) of the load roller mount (12) are each arranged between the outer bearing flange (35a; 35b) and the inner bearing flange (36a; 36b) of the wheel arm (5).

3. Industrial truck according to Claim 1 or 2, **characterized in that** the web (30) of the load roller mount (12) is arranged between the two inner bearing flanges (36a, 36b) of the wheel arm (5).

4. Industrial truck according to one of Claims 1 to 3, **characterized in that** the linkage (10) is provided with a bearing fork comprising two bearing sections (10a, 10b) for bearing the coupling bolt (21), which is arranged between the outer bearing levers (12a, 12b) of the load roller mount (12), wherein the web (30) of the load roller mount (12) is arranged between the two bearing sections (10a, 10b) of the linkage (10).

5. Industrial truck according to one of Claims 1 to 4, **characterized in that** a stop means (60) for the lowered position of the wheel arm (5) is formed between the load roller mount (12) and the wheel arm (5).

6. Industrial truck according to one of Claims 1 to 5, **characterized in that** the wheel arm (5) in the completely lowered position of the load part (4) has a wheel arm height (H) of below 50 mm.

7. System comprising an industrial truck according to one of the preceding claims with a wheel arm height (H) of the wheel arm (5) in the completely lowered position of the load part (4) of at most 50 mm and a non-standard pallet which has an entry height of a pickup opening for the wheel arms (5) of the industrial truck (1) of 50 mm between a travel surface and a lower side of a load-carrying face of the non-standard pallet.

## Revendications

1. Chariot de manutention (1), en particulier chariot élévateur, comprenant une partie d'entraînement (2) et une partie de charge (4) pouvant être soulevée par rapport à la partie d'entraînement (2), la partie de charge (4) présentant au moins un bras de roue (5) qui est muni d'au moins un rouleau de charge (6), le rouleau de charge (6) étant supporté à rotation dans un support de rouleau de charge (12) et le support de rouleau de charge (12) étant supporté de manière à pouvoir pivoter au niveau du bras de roue (5) au moyen d'un support pivotant (13), un boulon de palier (20) supporté dans le bras de roue (5) étant prévu pour le support pivotant (13) du support de rouleau de charge (12) et une tringlerie (10) en liaison fonctionnelle avec le support de rouleau de charge (12) étant prévue pour l'actionnement du support de rouleau de charge (12), laquelle est connectée de manière articulée au support de rouleau de charge (12) au moyen d'un boulon d'accouplement (21), **caractérisé en ce que** le support de rouleau de charge (12) est constitué de deux leviers de palier extérieurs (12a, 12b) dans lesquels sont réalisées des brides de palier (32a, 32b) pour le support du boulon de palier (20) et des brides de palier (33a, 33b) pour le support du boulon d'accouplement (21) et d'au moins une âme supplémentaire (30) disposée entre les leviers de palier extérieurs (12a, 12b), dans l'âme (30) étant réalisées une bride de palier (32c) pour le support du boulon de palier (20) et une bride de palier (33c) pour le support du boulon d'accouplement (21).

2. Chariot de manutention selon la revendication 1, **caractérisé en ce que** le bras de roue (5) présente des brides de palier extérieures (35a, 35b) pour le support du boulon de palier (20) et des brides de palier intérieures (36a, 36b) pour le support du boulon de palier (20), les leviers de palier extérieurs (12a, 12b) du support de rouleau de charge (12) étant à chaque fois disposés entre la bride de palier extérieure (35a ; 35b) et la bride de palier intérieure (36a ; 36b) du bras de roue (5).

3. Chariot de manutention selon la revendication 1 ou 2, **caractérisé en ce que** l'âme (30) du support de rouleau de charge (12) est disposée entre les deux brides de palier intérieures (36a, 36b) du bras de roue (5).

4. Chariot de manutention selon l'une quelconque des revendications 1 à 3, **caractérisé en ce que** la tringlerie (10) est pourvue d'une fourche de palier constituée de deux portions de palier (10a, 10b) pour le support du boulon d'accouplement (21), laquelle fourche de palier est disposée entre les leviers de palier extérieurs (12a, 12b) du support de rouleau de charge (12), l'âme (30) du support de rouleau de charge (12) étant disposée entre les deux portions de palier (10a, 10b) de la tringlerie (10).

5. Chariot de manutention selon l'une quelconque des revendications 1 à 4, **caractérisé en ce qu'**entre le support de rouleau de charge (12) et le bras de roue (5) est réalisé un moyen de butée (60) pour la position abaissée du bras de roue (5).

6. Chariot de manutention selon l'une quelconque des revendications 1 à 5, **caractérisé en ce que** le bras de roue (5) présente, dans la position complètement abaissée de la partie de charge (4), une hauteur de bras de roue (H) inférieure à 50 mm.

7. Système constitué d'un chariot de manutention selon l'une quelconque des revendications précédentes, avec une hauteur de bras de roue (H) du bras de roue (5) dans la position complètement abaissée de la partie de charge (4) de 50 mm au maximum et une palette spéciale, qui présente une hauteur d'introduction d'une ouverture de réception pour les bras de roue (5) du chariot de manutention (1) de 50 mm entre la surface de la chaussée et un côté inférieur d'une surface de support de charge de la palette spéciale.
